# EUROPÄISCHE PATENTSCHRIFT

(11) **EP 0 931 950 B1**
(45) Veröffentlichungstag und Bekanntmachung des Hinweises auf die Patenterteilung: **02.02.2005**
(21) Anmeldenummer: 98120451.4
(22) Anmeldetag: 29.10.1998
(51) Int. Cl.: F16C 35/06, F16C 35/04

(54) **Lagerbock**
Bearing support
Support de palier

(30) Priorität: 22.01.1998 DE 19802263
(43) Veröffentlichungstag der Anmeldung: 28.07.1999
(73) Patentinhaber: RK Rose + Krieger GmbH Verbindungs- und Positioniersysteme, 32423 Minden (DE)
(72) Erfinder: Meier, Jürgen, 31604 Raddestorf (DE); Lampert, Rolf, 32584 Löhne (DE)
(74) Vertreter: Stracke, Alexander, Dipl.-Ing.

(56) Entgegenhaltungen:
- DE-A- 2 119 283
- DE-A- 2 419 976
- DE-B- 1 212 812
- US-A- 4 758 101
- 'LINEAREINHEITEN, DECKBLATT', Februar 1996, RK ROSE UND KRIEGER Seiten III,4 - 5

## Beschreibung

Die vorliegende Erfindung betrifft eine Anordnung mit einem auf einer Gewindespindel geführten Aufnahmeschlitten gemäß dem Oberbegriff des Anspruchs 1.

Eine derartige Anordnung ist aus der DE A 2 119 283 bekannt.

Bislang werden die Wälzlager in entsprechende Wälzlageraufnahmen eingesteckt und mittels Sicherungsringen gehalten, wobei der Außenring des Wälzlagers an einen umlaufenden Bündchen des Gehäuses anliegt.

Zur Festsetzung des Sicherungsringes ist in dem Gehäuse eine umlaufende Ringnut vorgesehen, in der der Sicherungsring einliegt.

Diese, auch bei Lagerböcken für andere Verwendungszwecke bekannte Art der Wälzlageraufnahme- und -sicherung, ist hinsichtlich der Herstellung sehr aufwendig und kostenintensiv, da vor allem für die Ringnut des Sicherungsringes eine spannende Bearbeitung erforderlich ist.

Insbesondere unter Berücksichtigung des Aspektes, dass es sich bei den gattungsgemäßen Lagerböcken um in großer Stückzahl hergestellte Serienteile handelt, wiegt der Nachteil einer aufwendigen Fertigung besonders schwer.

Aber auch die Montage der Wälzkörper ist relativ aufwendig und verhindert unter wirtschaftlichen Gesichtspunkten einen optimalen Einsatz des Lagerbocks.

Der vorliegenden Erfindung liegt daher die Aufgabe zugrunde eine Anordnung der gattungsgemäßen Art so zu gestalten, dass sie einfacher aufgebaut und kostengünstiger herstell- und montierbar ist.

Diese Aufgabe wird durch eine Anordnung gelöst, die die Merkmale des Anspruchs 1 aufweist.

Durch diese konstruktiven Maßnahmen kann beispielsweise die Herstellung des Lagerbocks ohne eine mechanische Bearbeitung erfolgen.

Überdies ist der Zusammenbau des Lagerbocks wesentlich vereinfacht, da das Halteteil, dass das Wälzlager aufnimmt, lediglich in die Tasche eingesteckt und dort verrastet werden muss.

Dabei kann die Verrastung selbsttätig erfolgen, wozu nach einem vorteilhaften Gedanken der Erfindung an dem Halteteil Rastnasen angeformt sind, die mit Rastausnehmungen des Gehäuses korrespondieren.

Da ein Lagerbock für den genannten Einsatzzweck üblicherweise aus Leichtmetall besteht und dessen Gehäuse ebenso wie das Halteteil im Druckgussverfahren hergestellt ist, liegt materialbedingt eine gewisse Elastizität vor, die den Rastvorgang ohne weiteres ermöglicht.

Im übrigen bietet diese Art der Herstellung auch den Vorteil, dass sämtliche Teile ohne mechanische Bearbeitung zusammengefügt werden können, was naturgemäß eine Kostenminimierung mit sich bringt.

Auch die Demontage des Lagerbocks, beispielsweise bei einem notwendigen Austausch des Wälzlagers, ist sehr einfach, insbesondere dann, wenn in dem Gehäuse Zugangsöffnungen vorgesehen sind, durch die ein geeignetes Werkzeug führbar ist, mit dem die Verrastung gelöst werden kann.

Je nach Bedarf kann eine Mehrzahl von Wälzlagern im Sinne der Erfindung eingebaut werden, wozu dann lediglich eine entsprechende Anzahl von Taschen in dem Gehäuse vorzusehen sind.

Weitere vorteilhafte Ausgestaltungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Lagerbock der erfindungsgemäßen Anordnung in einer Explosivdarstellung

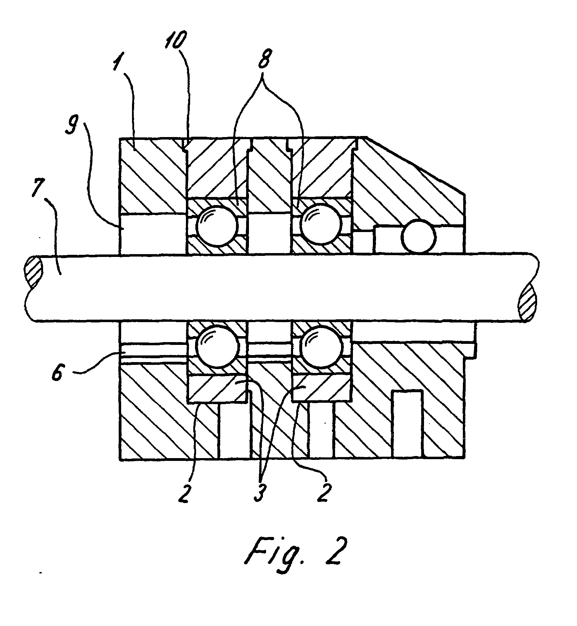

- Figur 2: den Lagerbock in Gebrauchsstellung in einer längsgeschnittenen Seitenansicht

In den Figuren ist ein Lagerbock zur Aufnahme einer Spindel 7 dargestellt, auf der ein nicht gezeigter, linear verstellbarer Aufnahmeschlitten geführt wird.

Der Lagerbock weist ein Gehäuse 1 auf, das im vorliegenden Ausführungsbeispiel zwei parallel und mit Abstand zueinander verlaufende Taschen 2 aufweist, die quer zur Achsrichtung angeordnet sind und die jeweils zu einer Außenseite hin eine Einstecköffnung 4 aufweisen.

Durch diese Einstecköffnung 4 ist ein Halteteil 3 eingesteckt, das ein Wälzlager 8 aufnimmt, in dem die Spindel 7 gelagert ist. Dabei entspricht die Dicke des Halteteiles 3 der Dicke des Wälzlagers 8. Eine sich in Achsrichtung erstreckende Innenöffnung 9 des Gehäuses 1 ist in ihrem Durchmesser so bemessen, dass sie eine Abstützung für die Außenringe der Wälzlager 8 bildet.

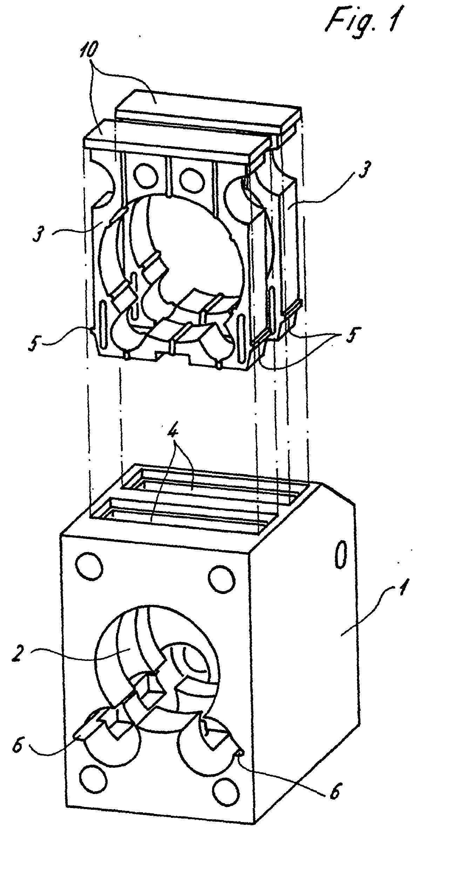

Wie insbesondere aus der Fig. 1 zu erkennen ist, weist jedes Halteteil 3 an sich gegenüberliegenden Seiten angeformte Rastnasen 5 auf, die in Rastausnehmungen 6 des Gehäuses 1 eingreifen, so dass sich eine formschlüssige Verbindung zwischen den Halteteilen 3 und dem Gehäuse 1 ergibt.

Die Oberseite jedes Halteteiles 3 ist als Deckelteil 10 ausgebildet und liegt flacheben in einer entsprechend ausgebildeten Ausnehmung der zugeordneten Tasche 4 ein, so dass ein hermetischer Verschluss der Tasche gegeben ist, der das Innere des Gehäuses 1 vor Verschmutzung schützt.

## Patentansprüche

1. Anordnung mit einem auf einer Gewindespindel (7) geführten, linear verstellbaren Aufnahmeschlitten und mit einem Gehäuse (1) mit mindestens einem darin angeordneten Lagerbock mit Wälzlager (8) für die Gewindespindel (7), **dadurch gekennzeichnet, dass** das Gehäuse (1) eine quer zur Achsrichtung angeordnete, zu einer Außenseite hin offene Tasche (2) aufweist, in die ein das Wälzlager (8) aufnehmendes Halteteil (3) eingesteckt ist, das mit dem Gehäuse (1) verbunden ist, dass die Dicke des Halteteiles (3) der Dicke des Wälzlagers (8) entspricht und dass das Gehäuse (1) eine konzentrisch zur Spindel (7) verlaufende Innenöffnung (9) aufweist, deren Durchmesser kleiner ist als der Außendurchmesser des Wälzlagers (8).

2. Anordnung nach Anspruch 1, **dadurch gekennzeichnet, dass** das Halteteil (3) und die Tasche (2) miteinander korrespondierende Rastmittel aufweisen.

3. Anordnung nach Anspruch 2, **dadurch gekennzeichnet, dass** die Rastmittel aus an dem Halteteil (3) angeformten Rastnasen (5) sowie in der Tasche (2) vorgesehene Rastausnehmungen (6) gebildet sind.

4. Anordnung nach Anspruch 1, **dadurch gekennzeichnet, dass** das Halteteil (3) auf seiner der Einstecköffnung (4) zugewandten Seite ein Deckelteil (10) aufweist, das flacheben mit der benachbarten Gehäuseseite verläuft.

## Claims

1. Arrangement comprising a linearly displaceable mounting slide, guided on a threaded spindle (7), and .comprising a housing (1) with at least one bearing block arranged therein and having a rolling-contact bearing (8) for the threaded spindle (7), **characterized in that** the housing (1) has a pocket (2) which is arranged transversely to the axial direction and is open towards an outer side and into which a retaining part (3) is inserted which accommodates the rolling-contact bearing (8) and is connected to the housing (1), **in that** the thickness of the retaining part (3) corresponds to the thickness of the rolling-contact bearing (8), and **in that** the housing (1) has an inner opening (9) which runs concentrically to the spindle (7) and whose diameter is smaller than the outside diameter of the rolling-contact bearing (8).

2. Arrangement according to Claim 1, **characterized in that** the retaining part (3) and the pocket (2) have latching means corresponding with one another.

3. Arrangement according to Claim 2, **characterized in that** the latching means are formed.from latching lugs (5) integrally formed on the retaining part (3) and from latching recesses (6) provided in the pocket (2).

4. Arrangement according to Claim 1, **characterized in that** the retaining part (3), on its side facing the insertion opening (4), has a cap part (10) which runs flush with the adjacent housing side.

## Revendications

1. Dispositif comportant un chariot récepteur, déplaçable linéairement, guidé sur une tige filetée (7), et un boîtier (1) dans lequel est monté au moins un support de palier avec des paliers à roulements (8) pour la tige filetée (7), **caractérisé en ce que** le boîtier (1) présente une poche (2) transversale à la direction de l'axe, ouverte en direction d'une face extérieure, dans laquelle est introduite une partie de maintien (3) logeant le palier à roulement (8), partie qui communique avec le boîtier (1), **en ce que** l'épaisseur de la partie de maintien (3) correspond à l'épaisseur du palier à roulement (8), et **en ce que** le boîtier (1) présente une ouverture intérieure (9) s'étendant concentriquement par rapport à la tige (7), dont le diamètre est inférieur au diamètre extérieur du palier à roulement (8).

2. Dispositif selon la revendication 1, **caractérisé en ce que** la partie de maintien (3) et la poche (2) présentent des moyens d'enclenchement qui se correspondent.

3. Dispositif selon la revendication 2, **caractérisé en ce que** les moyens d'enclenchement sont constitués par des becs d'enclenchement (5) formés sur la partie de maintien (3) ainsi que par des évidements d'enclenchement (6) prévus dans la poche (2).

4. Dispositif selon la revendication 1, **caractérisé en ce que** la partie de maintien (3) présente, sur sa face orientée vers l'ouverture d'introduction (4), une partie formant couvercle (10) s'étendant sur le même plan que la face du boîtier adjacente.
